# EUROPÄISCHE PATENTANMELDUNG

(11) **EP 4 851 671 A1**
(43) Veröffentlichungstag der Anmeldung: **09.12.2026**
(21) Anmeldenummer: 26182806.5
(22) Anmeldetag: 03.06.2026
(51) Int. Cl.: G01S 13/931, G01S 7/41, G01S 13/02

(54) **SYSTEM FÜR EIN FAHRZEUG**

(30) Priorität: 05.06.2025 DE 102025122111
(71) Anmelder: Huf Hülsbeck & Fürst GmbH & Co. KG, 42551 Velbert (DE)
(72) Erfinder: Schröder, Clara, 42551 Velbert (DE); Wehner, Dr. Philipp, 45879 Gelsenkirchen (DE); Heinemann, Ferdinand, 40822 Mettmann (DE); Schindler, Mirko, 42549 Velbert (DE)
(74) Vertreter: Bösherz Goebel Patentanwälte

(57) **Zusammenfassung**

Die Erfindung betrifft System (10) für ein Fahrzeug (200), zur Erkennung von Lebewesen (300) außerhalb des Fahrzeuges (200) vor dem Ausführen eines zumindest teilweise automatisierten Betriebsvorgangs, vorzugsweise Parkvorgangs, des Fahrzeuges (200), in einem stehenden, unbewegten Zustand des Fahrzeuges (200), aufweisend:
- ein Radarsensorsystem (20), aufweisend zumindest einen Radarsensor (30), der zur Erfassung eines Außenbereichs (250) des Fahrzeugs (200) ausgeführt ist,
- eine Verarbeitungsvorrichtung (40), die dazu ausgeführt ist, Erfassungsdaten, die das Radarsensorsystem (20) für die Erfassung des Außenbereichs (250) ermittelt, zu verarbeiten.

## Beschreibung

Die vorliegende Erfindung betrifft ein System für ein Fahrzeug zur Erkennung von Lebewesen außerhalb des Fahrzeuges. Ferner bezieht sich die Erfindung auf ein Verfahren sowie eine Vorrichtung zu diesem Zweck.

### Stand der Technik

Grundsätzlich ist die Erfassung von sich nicht bewegenden Lebewesen bei einem Fahrzeug nur eingeschränkt möglich.

Darüber hinaus ist es aus dem Stand der Technik bekannt, dass verschiedene Technologien zur Überwachung im Innen- und Außenbereich des Fahrzeuges genutzt werden können. So kann bspw. eine Ultra-Wideband (UWB)-Radartechnologie in Fahrzeugen für verschiedene Anwendungen eingesetzt werden. Ein Beispiel ist die Erkennung der Anwesenheit von Fahrzeuginsassen. Darüber hinaus wird UWB-Radar für gestenbasierte Steuerungen genutzt, beispielsweise zum berührungslosen Öffnen des Kofferraums durch Erkennen einer Fußbewegung unter dem Fahrzeugheck. Ein weiterer Anwendungsbereich ist die sichere Zugangskontrolle, bei der UWB-Technologie in digitalen Schlüsselsystemen eingesetzt wird, um die Position des Schlüssels genau zu bestimmen und so unbefugten Zugriff zu verhindern. Zudem ermöglicht UWB-Radar die präzise Ortung und Verfolgung von bewegten Objekten innerhalb und außerhalb des Fahrzeugs.

### Offenbarung der Erfindung

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Erkennung von Lebewesen zu ermöglichen.

Gegenstand der Erfindung ist ein System mit den Merkmalen des Anspruchs 1, ein Verfahren mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit dem erfindungsgemäßen Verfahren sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein System für ein Fahrzeug, insbesondere zur Erkennung von Lebewesen, bevorzugt außerhalb des Fahrzeuges, besonders bevorzugt vor dem Ausführen eines zumindest teilweise automatisierten Betriebsvorgangs, vorzugsweise Parkvorgangs, des Fahrzeuges. Die Erkennung der Lebewesen, kurz als Lebewesenerkennung bezeichnet, kann insbesondere in einem stehenden (unbewegten) Zustand des Fahrzeuges vorgesehen sein.

Das System kann ein Radarsensorsystem (vorzugsweise ein UWB-Radarsensorsystem) umfassen, bevorzugt zur Gestenerkennung und/oder gestenbasierten Steuerungen und/oder Anwesenheitsdetektion und/oder Annäherungsdetektion und/oder Ortung und/oder Lokalisierung und/oder Objektverfolgung und/oder Zugangskontrolle, aufweisend zumindest einen Radarsensor, der zur Erfassung eines Außenbereichs des Fahrzeugs ausgeführt ist.

Weiter kann das erfindungsgemäße System eine Verarbeitungsvorrichtung umfassen, die dazu ausgeführt ist, Erfassungsdaten, die das Radarsensorsystem für die Erfassung des Außenbereichs ermittelt, zu verarbeiten. Dies kann dazu dienen, um ein Ergebnis der Verarbeitung a) für die Erkennung der Lebewesen und/oder b) für die Ausführung (damit kann auch eine Einleitung aber auch die "weitere" Initiierung, also die Fortsetzung des Initiierungsvorgangs gemeint sein) des Betriebsvorgangs in Abhängigkeit von der Lebewesenerkennung bereitzustellen. Die Erfassungsdaten sind vorzugsweise digitale Erfassungsdaten. Diese können ggf. auch aus einer Analog-Digital-Umwandlung eines Radarsignals erhalten worden sein. Die Verarbeitungsvorrichtung kann einen Mikrocontroller umfassen, alternativ oder zusätzlich aber auch andere/weitere elektronische Komponenten wie einen Analog-Digital-Wandler, einen Timer, einen Prozessor, einen Datenspeicher, einen oder mehrere Ein- und Ausgänge für Signale und/oder Daten, und/oder dergleichen.

Durch das erfindungsgemäße System wird unter anderem der Vorteil erzielt, dass der Betriebsvorgang und insbesondere ein Fahrzeugbetrieb, welcher eine Fortbewegung des Fahrzeuges umfasst, erst dann gestartet wird, wenn sichergestellt ist, dass sich keine Lebewesen in einem Gefahrenbereich für diesen Betriebsvorgang befinden. Die Verwendung eines Radarsensorsystems ermöglicht hierbei eine besonders zuverlässige Erkennung von Lebewesen, auch bei schwierigen Lichtverhältnissen oder in dichter Umgebung.

Gemäß einem weiteren Vorteil kann vorgesehen sein, dass die Verarbeitungsvorrichtung dazu ausgeführt ist, bei der Verarbeitung eine Bewegungserkennung, vorzugsweise Atmungserkennung, bevorzugt mittels einer Frequenzauswertung anhand der Erfassungsdaten, durchzuführen. Dies kann dazu dienen, um die Lebewesenerkennung zu ermöglichen, und um vorzugsweise statische oder nicht lebende Objekte und insbesondere Hindernisse von lebenden Lebewesen im Außenbereich zu unterscheiden. Weiter kann dies ggf. dazu dienen, um die Lebewesenerkennung als eine Detektion von mindestens einem Lebewesen durchzuführen, welches sich im Außenbereich des Fahrzeuges befindet. Dies hat den Vorteil, dass statische oder sich bewegende nicht-lebende Objekte wie Äste oder Papier von lebenden Organismen unterschieden werden können. Dadurch kann die Genauigkeit der Lebewesenerkennung verbessert werden, sogar im stehenden, unbewegten Zustand des Fahrzeuges, und so eine zuverlässigere Steuerung des Fahrzeugs ermöglicht werden. Die Frequenzauswertung der Erfassungsdaten ermöglicht zudem eine präzise Unterscheidung zwischen verschiedenen Arten von Bewegungen, was die Klassifizierung der Lebewesen erleichtert. Ein sich bewegendes, nicht-lebendes Objekt geringer Größe ist bspw. für die Ausführung des Betriebsvorgangs weniger problematisch als ein Lebewesen der entsprechenden Größe wie bspw. eine Katze oder ein anderes kleineres Tier.

Daher kann es auch vorgesehen sein, dass das System und vorzugsweise die Verarbeitungsvorrichtung in der Lage ist, eine erkannte Bewegung als Atmung zu klassifizieren, um auf diese Weise Lebewesen von anderen Objekten zu unterscheiden.

Ferner ist es optional vorgesehen, dass die Verarbeitungsvorrichtung dazu ausgeführt ist, bei der Verarbeitung den Zustand des Fahrzeuges zu überprüfen, vorzugsweise auf Basis eines durch das Fahrzeug bereitgestellten Eingangssignals. Auf diese Weise ist es möglich, dass auf Basis des Zustands des Fahrzeuges und vorzugsweise nur im stehenden und/oder unbewegten Zustand die Lebewesenerkennung durchgeführt wird. Dadurch wird erreicht, dass die Lebewesen-Erkennung nur im stehenden (unbewegten) Zustand des Fahrzeugs stattfindet, was zu einer effizienten und zielgerichteten Funktionsweise führt. Im bewegten Zustand des Fahrzeuges kann hingegen auf eine herkömmliche Hinderniserkennung zurückgegriffen werden, welche allerdings im stehenden Zustand je nach Technologie nicht zuverlässig genug ist.

Es kann ferner möglich sein, dass das bereitgestellte Ergebnis der Verarbeitung zumindest eine der folgenden Angaben für die weitere Auswertung durch das Fahrzeug umfasst und vorzugsweise über eine elektronische Schnittstelle an wenigstens eine Fahrzeugvorrichtung bereitgestellt wird und hierzu die Schnittstelle wenigstens einen oder mindestens zwei elektrische Anschlüsse, bevorzugt Steckverbinder, zur Verbindung mit der Fahrzeugvorrichtung aufweist. Die Angaben können umfassen: Eine Angabe von zumindest einem detektierten Hindernis, eine Angabe von zumindest einem detektierten Lebewesen, vorzugsweise zusätzlich zum detektierten Hindernis, ein Ergebnis einer Klassifizierung des zumindest einem detektierten Hindernisses und/oder eines Objektes, wobei das Hindernis/Objekt als Lebewesen klassifiziert wird, und/oder des detektierten Lebewesens, eine Angabe einer erkannten Geste, vorzugsweise Kickgeste. Auf diese Weise kann das Fahrzeug die Umgebung besser wahrnehmen und auf potenzielle Gefahren reagieren. Durch die Klassifizierung von Hindernissen/Objekten als Lebewesen oder nicht-lebende Objekte kann das Fahrzeug gezieltere Entscheidungen treffen, z.B. beim Parkvorgang oder bei der Kollisionsvermeidung. Die Erkennung von Gesten bietet zusätzliche Möglichkeiten zur Interaktion mit dem Fahrzeug und kann beispielsweise für ein intuitiveres Bedienkonzept genutzt werden. Die Kickgeste kann bspw. als eine Fußbewegung, z. B. unter dem Fahrzeugheck, ausgeführt sein, beispielsweise zum berührungslosen Öffnen des Kofferraums, um mittels einer Kickerkennung erkannt werden.

Es ist denkbar, dass das Radarsensorsystem als ein Radarsystem zur Erkennung einer Geste und vorzugsweise Fußbewegungsgeste ausgeführt ist, also insbesondere als ein sogenanntes Kicksensorsystem. Es wird in diesem Fall primär zur Gesten- und bevorzugt Fußbewegungsgestenerkennung eingesetzt, und nur sekundär zur Lebewesenerkennung.

Es kann vorgesehen sein, dass das Radarsensorsystem dazu eingesetzt wird, Gesten von Personen im Außenbereich des Fahrzeugs zu erkennen. Beispielsweise ist es möglich, dass durch eine Handbewegung vor einer Klappe bzw. Fahrzeugtür ein Öffnungsbefehl ausgelöst wird. Es kann vorgesehen sein, dass die Auswertung der Radardaten des Radarsensorsystems auf einer Erfassung von Handbewegungen im Nahbereich des Fahrzeuges basiert, wobei insbesondere die Richtung und Geschwindigkeit der Bewegung zur Unterscheidung verschiedener Gesten berücksichtigt werden.

Es ist möglich, dass das Radarsensorsystem gestenbasierte Steuerungssignale für Funktionen des Fahrzeugs im Außenbereich bereitstellt. Beispielsweise kann vorgesehen sein, dass durch eine bestimmte Geste das automatische Entsperren oder Öffnen der Front- und/oder Heckklappe ausgelöst wird. Es kann ferner vorgesehen sein, dass unterschiedliche Gesten eine Differenzierung von Befehlen wie Verriegeln, Öffnen oder Aktivieren von Lichtsignalen ermöglichen.

Es kann vorgesehen sein, dass das Radarsensorsystem die Anwesenheit von Personen oder Tieren im Außenbereich des Fahrzeugs detektiert. Beispielsweise ist es möglich, dass das System erkennt, ob sich eine Person im Nahbereich einer Tür oder eines Kofferraums aufhält, um eine situationsabhängige Aktivierung von Funktionen, wie beispielsweise Begrüßungsbeleuchtung, zu ermöglichen. Es kann ferner vorgesehen sein, dass kleinste Bewegungen zur Unterscheidung zwischen lebenden Objekten und unbeweglichen Hindernissen genutzt werden.

Es ist möglich, dass das Radarsensorsystem eingesetzt wird, um die Annäherung von Personen an das Fahrzeug zu detektieren. Beispielsweise kann vorgesehen sein, dass bei Annäherung einer autorisierten Person eine Voraktivierung von Komfortsystemen erfolgt, etwa das Entsperren der Türen oder das Ausfahren von Türgriffen. Es kann auch vorgesehen sein, dass unterschiedliche Annäherungsgeschwindigkeiten oder -richtungen ausgewertet werden, um unbeabsichtigte Auslösungen zu vermeiden.

Es kann vorgesehen sein, dass das Radarsensorsystem zur Bestimmung der Position von Objekten oder Personen im Außenbereich des Fahrzeugs verwendet wird. Beispielsweise ist es möglich, dass die genaue Position eines sich bewegenden Schlüsselsenders im Nahbereich des Fahrzeugs detektiert wird, um einen schlüssellosen Zugang zu steuern. Es kann ferner vorgesehen sein, dass die Ortung genutzt wird, um die Bewegungsrichtung von Personen zu erfassen und darauf basierende Vorhersagen für Fahrzeugfunktionen zu treffen.

Es kann weiter möglich sein, dass die Verarbeitungsvorrichtung dazu ausgeführt ist, die Lebewesenerkennung selbst durchzuführen. Dies hat den Vorteil, dass die Effizienz des Systems erhöht wird, da die Verarbeitung der Sensor-Daten direkt im System stattfindet. Es kann zu einer schnelleren Reaktion auf Lebewesen führen und die Abhängigkeit von externen Einheiten minimiert werden.

Ein weiterer Vorteil kann im Rahmen der Erfindung erzielt werden, wenn die Verarbeitungsvorrichtung dazu ausgeführt ist, eine Initiierung und/oder Ausführung des Betriebsvorgangs einer weiteren Fahrzeugvorrichtung zu überlassen, und hierzu das Ergebnis der Verarbeitung und vorzugsweise der Lebewesenerkennung der weiteren Fahrzeugvorrichtung, vorzugsweise in digitaler Form und/oder über ein Fahrzeugkommunikationssystem, bereitstellt. Somit kann die Verarbeitungsvorrichtung die Kontrolle des Betriebsvorgangs an eine andere Fahrzeugvorrichtung übergeben. Das Ergebnis der Verarbeitung, insbesondere die Lebewesenerkennung, wird bspw. hierzu dieser anderen Fahrzeugvorrichtung bereitgestellt, idealerweise in digitaler Form oder über ein Fahrzeugkommunikationssystem. Dies ermöglicht eine dezentrale Steuerung und Verteilung von Aufgaben im Fahrzeug.

Optional kann es vorgesehen sein, dass die Verarbeitungsvorrichtung dazu ausgeführt ist, zyklisch zwischen einem ersten Modus und zumindest einem zweiten Modus umzuschalten, wobei
- im ersten Modus eine Gestenerkennung, vorzugsweise Kickerkennung, und
- im zweiten Modus eine Lebewesenerkennung, vorzugsweise Bewegungserkennung, bevorzugt Atmungserkennung, und vorzugsweise
- in einem dritten Modus eine energiesparende Annäherungserkennung,
auf Basis der Verarbeitung der Erfassungsdaten durch die Verarbeitungsvorrichtung durchgeführt wird, wobei bevorzugt die energiesparende Annäherungserkennung dazu dient, einen Basiszustand bereitzustellen, welcher zur Initiierung einer Umschaltung in den Modus zur Gestenerkennung- und/oder Lebewesenerkennung jeweils mit höherem Energieverbrauch vorgesehen ist, und/oder wobei zur Initiierung der Umschaltung in den Modus zur Lebewesenerkennung ein separater Auslöser vorgesehen ist, welcher bevorzugt auf Basis der Initiierung und/oder Ausführung des Betriebsvorgangs bereitgestellt wird. Auf diese Weise ist es möglich, dass das Radarsensorsystem und insbesondere die jeweiligen Radarsensoren je nach Bedarf verschiedene Funktionen ausführen. Durch das Umschalten zwischen den Modi kann der Radarsensor effizient auf unterschiedliche Szenarien reagieren. Die Gestenerkennung ermöglicht die Reaktion auf Anweisungen eines Benutzers, während die Lebewesenerkennung die Umgebung auf potenzielle Gefahren oder Personen scannt.

Außerdem kann es im Rahmen der Erfindung von Vorteil sein, dass das System dazu ausgeführt ist, die Initiierung und/oder Ausführung des Betriebsvorgangs zu unterbinden, wenn ein Lebewesen erkannt wird. Dies hat den Vorteil, dass der Vorgang wie ein Parkvorgang gestoppt oder von vornherein unterbunden wird und somit potenziellen Gefahren für Lebewesen und insbesondere Tiere vorgebeugt werden kann. Dadurch wird die Sicherheit erhöht und Unfälle vermieden.

Weiter ist im Rahmen der Erfindung denkbar, dass das System dazu ausgeführt ist, den Betriebsvorgang in der Form eines zumindest teilweise automatisierten oder autonomen Fortbewegungs- und vorzugsweise Parkvorgangs des Fahrzeuges, je nach Ergebnis der Verarbeitung, auszuführen oder zu unterbinden. Dadurch wird erreicht, dass das Fahrzeug seine Bewegungen je nach Anwesenheit von Lebewesen anpassen kann. Dies erhöht die Sicherheit während eines Parkvorgangs, indem potenzielle Kollisionen mit Personen oder Tieren verhindert werden.

Von weiterem Vorteil kann vorgesehen sein, dass zumindest einer oder zumindest zwei der Radarsensoren des Radarsensorsystems als ein UWB-Sensor ausgebildet ist. Dadurch kann die Erfindung auf bereits vorhandene Radarsensoren wie UWB-Sensoren zurückgreifen, wodurch der Herstellungs- und Installationsaufwand gesenkt und die Integration in bestehende Fahrzeugsysteme erleichtert werden kann. Die Verwendung von UWB-Sensoren ermöglicht eine präzise Positionsbestimmung und Bewegungserkennung, was zusätzlich zur effizienten Erkennung von Lebewesen beiträgt.

Das Radarsensorsystem kann mit anderen Worten zumindest teilweise als ein UWB-Radarsensorsystem ausgebildet sein. UWB bezeichnet insbesondere eine Ultra-Breitband-Technologie und steht entsprechend für Ultra-Wideband. Ein besonderes Merkmal des Radarsensorsystems in der Form eines UWB-Radarsensorsystems ist die Nutzung extrem großer Frequenzbereiche, bspw. mit einer Bandbreite von mindestens 500 MHz oder von mindestens 20 % des arithmetischen Mittelwertes von unterer und oberer Grenzfrequenz des genutzten Frequenzbandes.

Ferner kann das Radarsensorsystem und/oder der jeweilige UWB-Sensor in einem Frequenzbereich von 3,1 GHz bis 10,6 GHz oder in spezifischen Automotive-Frequenzbändern, beispielsweise um 6-8 GHz oder 24 GHz oder 76 bis 81 GHz, betrieben werden. Insbesondere kann ein Impuls-Radarverfahren oder eine FMCW (Frequency Modulated Continuous Wave)-Technologie mit einer sehr hohen Bandbreite, wie bspw. über 500 MHz, zum Einsatz kommen. Weiter kann eine Kombination aus UWB-Radar und anderen Sensortechnologien wie 77- oder 79- GHz-Radarsensoren oder LiDAR eine verbesserte Umfeldwahrnehmung liefern, insbesondere für hochautomatisierte oder autonome Fahrsysteme. Zusätzlich kann das Radarsensorsystem und insbesondere der jeweilige UWB-Sensor zur präzisen Positionsbestimmung am oder innerhalb des Fahrzeugs eingesetzt werden, beispielsweise für digitale Schlüsselsysteme, vorzugsweise basierend auf Time-of-Flight- (ToF) oder Time-Difference-of-Arrival- (TDoA) Messungen.

Ein weiterer Vorteil im Rahmen der Erfindung ist erzielbar, wenn zumindest ein oder zumindest zwei Radarantennen für den jeweiligen oder den einzigen Radarsensor vorgesehen sind, wobei die oder zumindest eine der Radarantennen derart ausgerichtet ist, dass die Erfassung unterhalb des Fahrzeuges zur Lebewesenerkennung ermöglicht wird, und/oder zumindest eine der Radarantennen derart ausgerichtet ist, dass eine Gesten- und vorzugsweise Kickerkennung ermöglicht wird, vorzugsweise von Fußbewegungen und/oder unter dem Fahrzeug / unter einem Fahrzeugheck. Dies hat den Vorteil, dass der Radarsensor sowohl die Erfassung von Lebewesen unterhalb des Fahrzeugs als auch die Erkennung von Gesten und Kicks ermöglichen kann. Dies bietet eine umfassendere Überwachung der Umgebung und erweitert somit die Funktionalität des Sensors.

Ein weiterer Vorteil kann im Rahmen der Erfindung erzielt werden, wenn das Radarsensorsystem und/oder zumindest einer der Radarsensoren und/oder zumindest eine Radarantenne des Radarsensorsystems und/oder die Verarbeitungsvorrichtung dazu ausgebildet ist, in oder an zumindest einem/einer der folgenden Fahrzeugkomponenten befestigt zu werden oder dort befestigt ist, wobei im letzteren Fall die Fahrzeugkomponente Teil des Systems ist:
- Ein Stoßfänger,
- Ein Emblem,
- Ein Türgriff,
- Eine Säule, vorzugsweise B-Säule,
- Ein Schweller,
- Eine Radhausverkleidung,
- Ein Fahrzeugunterboden.

Es ist somit möglich, dass das Radarsensorsystem flexibel an verschiedenen Fahrzeugkomponenten angebracht werden kann, um die Integration in unterschiedliche Fahrzeuge leichter zu gestalten und den Anwendungsbereich zu erweitern. Die flexible Montage ermöglicht auch eine Anpassung der Sensorposition an spezifische Anforderungen des Fahrzeugs oder der Anwendungsszenarien.

Darüber hinaus kann die Verarbeitungsvorrichtung dazu ausgeführt sein, für die Lebewesenerkennung die Sensordaten von verschiedenen Sensoren des Fahrzeuges unterschiedlichen Sensortyps auszuwerten (Sensorfusion). Die Kombination verschiedener Sensoren wie Kicksensor, UWB-Sensoren und PDC (Park-Distance-Control) bietet Synergien und erweitert die Funktionalität des Systems.

Optional kann es vorgesehen sein, dass das System dazu ausgeführt ist, den Betriebsvorgang in der Form von zumindest einer der folgenden Vorgänge zu initiieren:
- Ein Einparkvorgang,
- Eine autonome Fahrzeugfunktion,
- Ein Fernstart des Fahrzeuges,
- Eine Fernsteuerung des Fahrzeuges zur Bewegung des Fahrzeuges,
- Eine unüberwachte Fahrzeugfunktion,
- Eine Alarmanlage.

Dabei kann das Radarsensorsystem alternativ oder zusätzlich für zumindest eine der folgenden Funktionen verwendet werden:
- Eine Gestendetektion, vorzugsweise Kickdetektion zur automatischen Öffnung einer Heck- oder Frontklappe,
- Eine Personendetektion,
- Eine Kollisionserkennung,
- Eine Regelung von Fahrwerksparametern,
- Eine Erkennung von Untergründen in besonderen Fahrsituationen, wie Schnee,
- Eine Annäherungsdetektion und/oder Ortung und/oder Authentifizierung eines Benutzers.

Ebenfalls Gegenstand der Erfindung ist ein Verfahren für ein Fahrzeug, zur Erkennung von Lebewesen außerhalb des Fahrzeuges vor dem Ausführen eines zumindest teilweise automatisierten Betriebsvorgangs, vorzugsweise Parkvorgangs, des Fahrzeuges, in einem stehenden und/oder unbewegten Zustand des Fahrzeuges, umfassend:
- Empfangen von Erfassungsdaten von einem Radarsensorsystem des Fahrzeuges für eine Erfassung eines Außenbereichs des Fahrzeuges,
- Verarbeiten der (empfangenen) Erfassungsdaten,
- Bereitstellen eines Ergebnisses der Verarbeitung für die Erkennung der Lebewesen, und/oder
- Durchführen der Lebewesenerkennung bei der Verarbeitung, um das Ergebnis der Verarbeitung als Hinweis auf ein erkanntes Lebewesen bereitzustellen,
- Bereitstellen des Ergebnisses der Verarbeitung für die Initiierung und/oder Ausführung des Betriebsvorgangs in Abhängigkeit von der Lebewesenerkennung.

Damit bringt das erfindungsgemäße Verfahren die gleichen Vorteile mit sich, wie sie ausführlich mit Bezug auf ein erfindungsgemäßes System beschrieben worden sind. Zudem kann das erfindungsgemäße System und vorzugsweise eine Verarbeitungsvorrichtung des erfindungsgemäßen Systems geeignet sein, das erfindungsgemäße Verfahren auszuführen.

Unter einem stehenden Zustand des Fahrzeuges kann mit anderen Worten ein unbewegter Zustand oder ein Zustand im Stillstand des Fahrzeuges verstanden werden, in welchem sich das Fahrzeug somit nicht fortbewegt. Damit bietet das erfindungsgemäße System und Verfahren eine Verbesserung gegenüber herkömmlichen Methoden zur HindernisErkennung, bei welchen lediglich eine (relative) Annäherung eines Objekts detektiert wird. Erfindungsgemäß kann es also vorgesehen sein, dass sich sowohl das Fahrzeug als auch das Lebewesen (als das Objekt) nicht bewegt oder nicht zwingend bewegen muss und somit ein relativer Abstand zwischen Fahrzeug und Objekt/Lebewesen im Wesentlichen konstant bleibt.

Ebenfalls Gegenstand der Erfindung ist eine Vorrichtung zur Datenverarbeitung, vorzugsweise in der Form der Verarbeitungsvorrichtung des erfindungsgemäßen Systems, umfassend Mittel zur Ausführung der Schritte des erfindungsgemäßen Verfahrens. Damit bringt die erfindungsgemäße Vorrichtung zur Datenverarbeitung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind. Das Computerprogramm kann ferner zumindest teilweise nicht-flüchtig und/oder als Software zum Download und/oder als Cloud-Service und/oder als ausführbares Programm und/oder als Konfigurationsdatei und/oder als Programmbibliothek und/oder als Quelltext und/oder in kompilierter und/oder verschlüsselter und/oder komprimierter Form und/oder in einer Kombination davon vorliegen.

Als der Computer kann eine Datenverarbeitungsvorrichtung, vorzugsweise die erfindungsgemäße Vorrichtung zur Datenverarbeitung, oder ein anderes Computersystem vorgesehen sein.

Die erfindungsgemäße Vorrichtung zur Datenverarbeitung und vorzugsweise der Computer kann dazu ausgebildet sein, das erfindungsgemäße Computerprogramm auszuführen. Hierzu kann die erfindungsgemäße Vorrichtung zur Datenverarbeitung wenigstens einen Prozessor aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass die erfindungsgemäße Vorrichtung zur Datenverarbeitung zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Die erfindungsgemäße Vorrichtung zur Datenverarbeitung bzw. der Computer kann somit auch als eine elektronische Schaltung ausgebildet sein. Die erfindungsgemäße Vorrichtung zur Datenverarbeitung kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie bspw. zur Bluetooth- oder Nahfeldkommunikation (NFC) aufweisen. Ferner kann die erfindungsgemäße Vorrichtung zur Datenverarbeitung als ein oder mehrere Steuergeräte, d. h. auch als ein System aus Steuergeräten, ausgeführt sein.

Die erfindungsgemäße Vorrichtung zur Datenverarbeitung kann vollständig oder teilweise auch in einer Cloud und/oder als ein Server vorgesehen sein, um über die Schnittstelle die Datenverarbeitung für eine lokale Anwendung zur Verfügung zu stellen. Entsprechend kann die erfindungsgemäße Vorrichtung zur Datenverarbeitung auch als ein Computersystem wie ein verteiltes System und vorzugsweise Server-Client-System ausgebildet sein. Auch ist es möglich, dass die erfindungsgemäße Vorrichtung zur Datenverarbeitung als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer und/oder in die erfindungsgemäße Vorrichtung zur Datenverarbeitung integriert sein.

Darüber hinaus kann das erfindungsgemäße Verfahren auch als ein computerimplementiertes Verfahren ausgeführt sein. Alternativ oder zusätzlich können jeder einzelne oder sämtliche der offenbarten Verfahrensschritte optional computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Systems und Verfahrens gemäß Ausführungsvarianten der Erfindung.
- Fig. 2: eine schematische Darstellung eines Fahrzeuges und Systems gemäß Ausführungsvarianten der Erfindung.

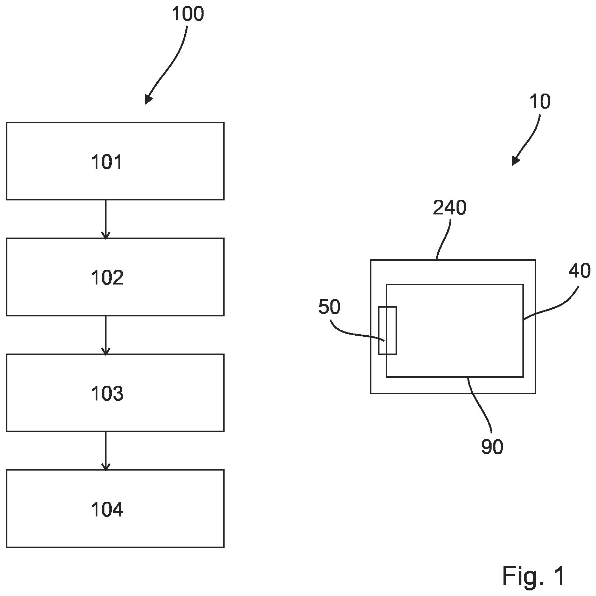

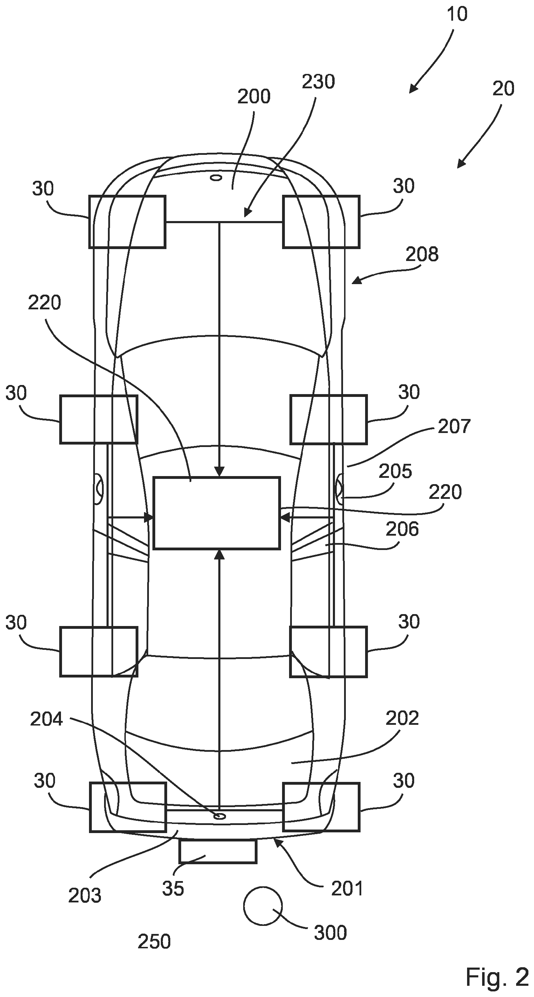

Fig. 1 und 2 veranschaulichen gemäß Ausführungsbeispielen der Erfindung ein System 10 und ein Verfahren 100 für ein Fahrzeug 200, jeweils zur Erkennung von Lebewesen 300 außerhalb des Fahrzeuges 200 vor dem Ausführen eines zumindest teilweise automatisierten Betriebsvorgangs, vorzugsweise Parkvorgangs, des Fahrzeuges 200, in einem stehenden Zustand des Fahrzeuges 200.

Das System 10 kann hierbei ein in Fig. 2 mit weiteren Einzelheiten dargestelltes Radarsensorsystem 20 umfassen. Dieses kann ferner zumindest einen Radarsensor 30 aufweisen, der zur Erfassung eines Außenbereichs 250 des Fahrzeugs 200 ausgeführt ist.

Weiter können zumindest ein oder zumindest zwei Radarantennen 35 für den jeweiligen oder den einzigen Radarsensor 30 vorgesehen sein. Die oder zumindest eine der Radarantennen 35 kann derart ausgerichtet sein, dass die Erfassung unterhalb des Fahrzeuges 200 zur Lebewesenerkennung ermöglicht wird. Weiter kann zumindest eine der Radarantennen 35 derart ausgerichtet sein, dass eine Gesten- und vorzugsweise Kickerkennung ermöglicht wird.

Weiter kann bei dem System 10 eine Verarbeitungsvorrichtung 40 vorgesehen sein, die dazu ausgeführt ist, Erfassungsdaten, die das Radarsensorsystem 20 für die Erfassung des Außenbereichs 250 ermittelt, zu verarbeiten, um ein Ergebnis der Verarbeitung für die Erkennung der Lebewesen 300 und die Ausführung und/oder weitere Initiierung des Betriebsvorgangs in Abhängigkeit von der Lebewesenerkennung bereitzustellen.

Gemäß Ausführungsvarianten der Erfindung ist es eine Idee, die Anforderung zu erfüllen, dass ein - insbesondere stehendes - Fahrzeug 200 ohne Prüfung, dass sich keine Lebewesen 300 und insbesondere Tiere unter dem Fahrzeug 200 befinden, keinen zumindest teilweise automatisierten Vorgang wie einen autonomen Parkvorgang starten soll. Es wird eine Lösung vorgeschlagen, bei welcher zumindest ein Sensor, vorzugsweise Radarsensor 30, bevorzugt mehrere Radarsensoren 30 am Umfang des Fahrzeugs 200, zur Lebewesenerkennung vor dem Starten des Vorgangs wie einer autonomen Fahrt genutzt werden. Vorteilhaft ist hierbei die Verwendung eines bereits am Fahrzeug 200 für eine andere Funktion vorhandenen Sensor/Radarsensor 30, z. B. eines "Kick-Sensors". Wird als der zumindest eine Sensor zumindest ein UWB-Radar Sensor bevorzugt, können ggf. zwei Radarantennen 35 bei einem einzigen Radarsensor 30 verwendet werden, wobei bspw. eine Radar-Antenne unter das Fahrzeug 200 gerichtet wird und eine zweite Radarantenne 35 zur Kickerkennung vorgesehen ist.

Das verwendete Radarsensorsystem 20 kann als ein Kicksensorsystem ausgebildet sein. Unter einem "Kick-Sensor" bzw. Kicksensorsystem kann ein berührungsloses Sensorsystem verstanden werden, das zur automatisierten Öffnung und/oder Schließung einer Fahrzeugklappe, wie einer Heckklappe oder einer vorderen Kofferraumklappe ("Frunk"), eingesetzt werden kann. Wenigstens ein Sensor kann dabei im unteren Bereich der Fahrzeugkarosserie, beispielsweise an der hinteren oder vorderen Stoßstange, angeordnet sein und eine gezielte Fußbewegung eines Benutzers erfassen (auch als "Kickerkennung" bezeichnet). Die Erkennung der Bewegung kann grundsätzlich durch kapazitive, optische, radarbasierte und/oder ultraschallbasierte Sensorik erfolgen.

Das System kann ferner mit einer Zugangskontrolle kombiniert werden, sodass eine Aktivierung nur erfolgt, wenn sich ein autorisierter Fahrzeugschlüssel oder ein sonstiges zur Authentifizierung verwendetes mobiles Gerät (ID-Geber) in einer vorgegebenen Reichweite befindet. Nach erfolgreicher Erkennung der Fußbewegung und optionaler Authentifizierung kann die jeweilige Fahrzeugklappe bspw. mittels eines elektrischen oder elektromechanischen Antriebs geöffnet und/oder geschlossen werden.

Ein Kick-Sensor kann den Bedienkomfort erhöhen, insbesondere wenn der Benutzer die Hände nicht frei hat, und die Ergonomie beim Be- und Entladen des Fahrzeugs 200 verbessern. Durch seine berührungslose Funktionsweise kann er zur Minimierung von mechanischem Verschleiß beitragen und eine intuitive Steuerung der Klappenbewegung ermöglichen.

Ein Erfindungsgedanke von Ausführungsbeispielen der Erfindung ist die Verwendung von Radarsensoren 30, um Lebewesen 300 außerhalb des Fahrzeugs 200 zu erkennen, bevor ein Vorgang wie ein autonomer Parkvorgang gestartet wird. Im Gegensatz zu herkömmlichen Lösungen wird entsprechend vor dem Starten des Vorgangs, also bevorzugt im stehenden Zustand des Fahrzeuges 200, das Vorhandensein von Lebewesen wie Tieren unter oder neben dem Fahrzeug 200 geprüft. Das hat den Vorteil, dass die Sicherheit für Tiere und Personen erhöht wird.

Ausführungsvarianten der Erfindung betreffen ein Radarsensorsystem 20 für ein Fahrzeug 200, das zur Erfassung der Fahrzeugumgebung und/oder zur Innenraumüberwachung beim Fahrzeug 200 genutzt wird. Es kann vorgesehen sein, dass das System 10 verschiedene Radartechnologien, insbesondere Frequenzmodulierte Dauerstrichradare (FMCW-Radar) und Ultra-Wideband-Sensoren (UWB), kombiniert oder zumindest eine dieser Technologien verwendet, um eine präzise Detektion und ggf. auch Klassifikation von Objekten und/oder eine robuste Umfeldüberwachung zu ermöglichen.

Das Radarsensorsystem 20 kann für verschiedene Anwendungsfälle genutzt werden, wie z. B. ein Autonomes Fahren/Parken und/oder als ein Gesten-Sensor und/oder zur Intention-Detection und/oder zur Umfeldüberwachung bzw. als Diebstahlwarnanlage und/oder zur Kollisionserkennung und/oder zum Schutz von Personen/Lebewesen 300 um oder unter dem Fahrzeug 200 und/oder zur Regelung von Fahrwerksparametern und/oder zur Erkennung von Untergründen in Fahrsituationen (Schnee). Es kann weiterhin vorgesehen sein, dass das Radarsensorsystem 20 ergänzend zu diesen Funktionen für Schutz von Personen/Lebewesen 300 um oder unter dem Fahrzeug 200 verwendet wird.

Das Radarsensorsystem 20 kann zumindest einen Radarsensoren 30 und ggf. auch Radarsensoren 30 unterschiedlicher Technologie umfassen (z.B.: 8GHz bis 79GHz, oder höher, FMCW-Radar, UWB). Das Radarsensorsystem 20 kann bspw. als eine Kombination aus UWB-Sensoren und einem anderen, wie einem 79-GHz-Radarsystem ausgebildet sein, um eine präzise, hochauflösende und zuverlässige Erfassung von relevanten Objekten zu ermöglichen. Darüber hinaus kann es möglich sein, dass das Radarsensorsystem 20 für die Gestenerkennung genutzt wird, wobei insbesondere die Anordnung von UWB-Sensoren im Heckbereich und/oder im Bereich der Seitentüren eine intuitive und berührungslose Steuerung von Fahrzeugfunktionen unterstützt.

Gemäß Ausführungsvarianten der Erfindung kann dabei ein bestehendes Radarsensorsystem 20 mit der Funktion zur Lebewesenerkennung erweitert werden. Bspw. sind am Fahrzeug 200 bereits vier UWB-Sensoren verbaut, bspw. als Zugangssystem. Diese können dann kombiniert werden mit 79 GHz Sensoren und weiteren UWB-Sensoren. Insbesondere durch die Nutzung von 79 GHz Sensoren kann das Radarsensorsystem 20 mit verbesserter Auflösung betrieben werden. UWB hat den Vorteil, dass es Bewegungen sehr gut erkennen kann, z. B. ein Atmen. Auf diese Weise kann ggf. auch eine Klassifizierung der Lebewesen 300 erfolgen. Die Auswertung zur Lebewesenerkennung, z. B. der Bewegung bzw. Atemfrequenz, kann über eine Frequenzanalyse oder andere geeignete Algorithmen wie bspw. auch Algorithmen des maschinellen Lernens erfolgen. Es können z. B. zwei UWB-Sensoren links und rechts am Heck des Fahrzeuges 200 eingesetzt werden, welche primär zur Gestenerkennung dienen, aber für die Funktion der Lebewesenerkennung zusätzlich genutzt werden. Weiter kann zumindest ein Sensor des Radarsensorsystems 20 am Heck, vorzugsweise am Heckstoßfänger, und/oder an Seitentüren und/oder am Frunk und/oder an einer Säule 206 wie der B-Säule 206 und/oder am Türgriff 205 und/oder am Außenspiegel vorgesehen sein.

Weiter können bei dem Radarsensorsystem 20 zumindest ein UWB-Sensor und zumindest ein FMCW-Radar genutzt werden, um eine präzise Distanzmessung sowie eine Erkennung kleinster Bewegungen zu ermöglichen. Darüber hinaus kann vorgesehen sein, dass das Radarsensorsystem 20 zur Umfeldüberwachung eingesetzt wird, beispielsweise im Rahmen einer Diebstahlwarnanlage, wobei UWB-Sensoren Bewegungsmuster im Nahbereich des Fahrzeugs 200 erfassen können.

Im Falle der Nutzung von UWB-Sensoren, insbesondere bei einer Frequenz von 8 GHz, kann vorgesehen sein, dass eine Kombination mit einer Distanzmessung (Ranging) erfolgt. Dadurch kann eine hochgenaue Positionsbestimmung ermöglicht werden, insbesondere in Verbindung mit bestehenden UWB-Sensoren, die bereits im Fahrzeug 200 für andere Anwendungen, wie etwa Zugangssysteme, integriert sind. Es ist möglich, dass das Radarsensorsystem 20 die bereits vorhandenen UWB-Sensoren im Fahrzeug 200 für zusätzliche Funktionen nutzt und diese mit weiteren UWB- oder 79-GHz-Sensoren kombiniert.

Es kann vorgesehen sein, dass das Radarsensorsystem 20 für Kicksensor-Anwendungen genutzt wird, wobei sowohl UWB-Sensoren mit 8 GHz als auch 79-GHz-Sensoren zum Einsatz kommen können. Es ist möglich, dass eine Kombination dieser Technologien erfolgt, um eine verbesserte Objekterkennung sowie eine erhöhte Zuverlässigkeit der Gestenerkennung zu erreichen.

Das Radarsensorsystem 20 kann eine zuverlässige Bewegungserkennung auch dadurch ermöglichen, indem es Frequenzanalysen zur Identifikation von Atmungsbewegungen oder anderen feinen Bewegungen durchführt.

Die Sensoren des Radarsensorsystems 20 können an verschiedenen Positionen im Fahrzeug 200 integriert sein. Es kann vorgesehen sein, dass Sensoren wie UWB-Sensoren für Gestenerkennungsfunktionen im Heckbereich, etwa im Heckstoßfänger, oder an den Seitentüren angeordnet werden. Alternativ oder ergänzend kann vorgesehen sein, dass Sensoren im Bereich des vorderen Gepäckraums (Frunk) integriert werden, um eine erweiterte Bedienbarkeit zu ermöglichen.

Es kann weiterhin vorgesehen sein, dass das Radarsensorsystem 20 mit einem "Phone as a Key" (PaaK)-System 10 kombiniert wird. Dabei kann bspw. die UWB-Technologie für eine hochpräzise Distanzmessung genutzt werden, sodass eine sichere Authentifizierung des Fahrzeugnutzers ermöglicht wird. Die Kombination von UWB mit weiteren Sensoren kann dazu beitragen, eine robuste und manipulationssichere Zugangslösung bereitzustellen.

Das Radarsensorsystem 20 kann gemäß Ausführungsvarianten der Erfindung daher verschiedene Sensortypen und Frequenzbereiche adaptiv nutzen, um eine optimale Leistung in unterschiedlichen Anwendungsfällen zu ermöglichen. Dabei kann vorgesehen sein, dass die Verarbeitung der Sensordaten sowohl lokal in den jeweiligen Sensoreinheiten als auch zentral in einer übergeordneten Recheneinheit (z. B. einer Fahrzeugvorrichtung 220) erfolgt. Durch eine intelligente Sensorfusion kann eine präzisere und zuverlässigere Erfassung der Fahrzeugumgebung erreicht werden, was insbesondere für sicherheitsrelevante Anwendungen vorteilhaft sein kann.

Das Radarsensorsystem 20 und/oder zumindest einer der Radarsensoren 30 und/oder zumindest eine Radarantenne 35 des Radarsensorsystems 20 und/oder die Verarbeitungsvorrichtung 40 können dazu ausgebildet sein in oder an zumindest einem/einer der folgenden Fahrzeugkomponenten 240 befestigt zu werden oder dort befestigt ist:
- Ein Stoßfänger 203,
- Ein Emblem 204,
- Ein Türgriff 205,
- Eine Klappe 202,
- Eine Säule 206, vorzugsweise B-Säule,
- Ein Schweller 207,
- Eine Radhausverkleidung 208,
- Ein Fahrzeugunterboden 201.

Die Verarbeitungsvorrichtung 40 kann ferner dazu ausgeführt sein, bei der Verarbeitung den Zustand des Fahrzeuges 200 zu überprüfen, vorzugsweise auf Basis eines durch das Fahrzeug 200 bereitgestellten Eingangssignals, welches bspw. über eine Schnittstelle 50 bereitgestellt werden kann. Alternativ oder zusätzlich kann auch das bereitgestellte Ergebnis der Verarbeitung über eine elektronische Schnittstelle 50 an wenigstens eine Fahrzeugvorrichtung 220 bereitgestellt werden und hierzu die Schnittstelle wenigstens einen oder mindestens zwei elektrische Anschlüsse, bevorzugt Steckverbinder, zur Verbindung mit der Fahrzeugvorrichtung 220 aufweisen.

Die Verarbeitungsvorrichtung 40 kann des Weiteren dazu ausgeführt sein, die Ausführung des Betriebsvorgangs einer weiteren Fahrzeugvorrichtung 220 zu überlassen, und hierzu das Ergebnis der Verarbeitung und vorzugsweise der Lebewesenerkennung der weiteren Fahrzeugvorrichtung 220, vorzugsweise in digitaler Form und/oder über ein Fahrzeugkommunikationssystem 230, bereitzustellen, bevorzugt über die Schnittstelle 50.

In Fig. 1 ist ferner ein Verfahren 100 gemäß Ausführungsvarianten der Erfindung dargestellt. Gemäß einem ersten Verfahrensschritt 101 erfolgt dabei ein Empfangen von Erfassungsdaten von einem Radarsensorsystem 20 des Fahrzeuges 200 für eine Erfassung eines Außenbereichs 250 des Fahrzeuges 200. Gemäß einem zweiten Verfahrensschritt 102 erfolgt ein Verarbeiten der Erfassungsdaten. Gemäß einem dritten Verfahrensschritt 103 erfolgt ein Bereitstellen eines Ergebnisses der Verarbeitung 101 für die Erkennung der Lebewesen 300, und/oder gemäß einem vierten Verfahrensschritt 104 ein Bereitstellen des Ergebnisses der Verarbeitung 101 für die Ausführung des Betriebsvorgangs in Abhängigkeit von der Lebewesenerkennung.

Die Verarbeitungsvorrichtung 40 kann auch als eine Vorrichtung 90 zur Datenverarbeitung gemäß Ausführungsvarianten der Erfindung ausgebildet sein, die eingerichtet ist, das Verfahren 100 auszuführen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: System

- 20: Radarsensorsystem

- 30: Radarsensor
- 35: Radarantennen

- 40: Verarbeitungsvorrichtung

- 50: Schnittstelle

- 90: Vorrichtung

- 100: Verfahren

- 200: Fahrzeug
- 201: Fahrzeugunterboden
- 202: Klappe
- 203: Stoßfänger
- 204: Emblem
- 205: Türgriff
- 206: Säule
- 207: Schweller
- 208: Radhausverkleidung

- 220: Fahrzeugvorrichtung
- 230: Fahrzeugkommunikationssystem

- 240: Fahrzeugkomponente
- 250: Außenbereich

- 300: Lebewesen

- 101-104: Verfahrensschritte

## Patentansprüche

1. System (10) für ein Fahrzeug (200), zur Erkennung von Lebewesen (300) außerhalb des Fahrzeuges (200) vor dem Ausführen eines zumindest teilweise automatisierten Betriebsvorgangs, vorzugsweise Parkvorgangs, des Fahrzeuges (200), in einem stehenden, unbewegten Zustand des Fahrzeuges (200), aufweisend:
- ein Radarsensorsystem (20), vorzugsweise ein UWB-Radarsensorsystem (20) zur Gestenerkennung, aufweisend zumindest einen Radarsensor (30), der zur Erfassung eines Außenbereichs (250) des Fahrzeugs (200) ausgeführt ist,
- eine Verarbeitungsvorrichtung (40), die dazu ausgeführt ist, Erfassungsdaten, die das Radarsensorsystem (20) für die Erfassung des Außenbereichs (250) ermittelt, zu verarbeiten, um ein Ergebnis der Verarbeitung
a) für die Erkennung der Lebewesen (300) und
b) die Ausführung des Betriebsvorgangs in Abhängigkeit von der Lebewesenerkennung
bereitzustellen.

2. System (10) nach Anspruch 1,
**dadurch gekennzeichnet,**
**dass** die Verarbeitungsvorrichtung (40) dazu ausgeführt ist, bei der Verarbeitung eine Bewegungserkennung, vorzugsweise Atmungserkennung, bevorzugt mittels einer Frequenzauswertung anhand der Erfassungsdaten, durchzuführen, um die Lebewesenerkennung zu ermöglichen, und um statische oder nicht lebende Objekte und insbesondere Hindernisse von lebenden Lebewesen (300) im Außenbereich (250) zu unterscheiden,
und um die Lebewesenerkennung als eine Detektion von mindestens einem Lebewesen (300) durchzuführen, welches sich im Außenbereich (250) des Fahrzeuges (200) befindet.

3. System (10) nach einem der vorhergehenden Ansprüche,
**dadurch gekennzeichnet,**
**dass** die Verarbeitungsvorrichtung (40) dazu ausgeführt ist, bei der Verarbeitung den Zustand des Fahrzeuges (200) zu überprüfen, vorzugsweise auf Basis eines durch das Fahrzeug (200) bereitgestellten Eingangssignals, um auf Basis des Zustands des Fahrzeuges (200) und nur im stehenden und/oder unbewegten Zustand die Lebewesenerkennung durchzuführen.

4. System (10) nach einem der vorhergehenden Ansprüche,
**dadurch gekennzeichnet,**
**dass** das bereitgestellte Ergebnis der Verarbeitung zumindest eine der folgenden Angaben für die weitere Auswertung durch das Fahrzeug (200) umfasst und vorzugsweise über eine elektronische Schnittstelle (50) an wenigstens eine Fahrzeugvorrichtung (220) bereitgestellt wird und hierzu die Schnittstelle (50) wenigstens einen oder mindestens zwei elektrische Anschlüsse, bevorzugt Steckverbinder, zur Verbindung mit der Fahrzeugvorrichtung (220) aufweist:
- Angabe von zumindest einem detektierten Hindernis,
- Angabe von zumindest einem detektierten Lebewesen (300), vorzugsweise zusätzlich zum detektierten Hindernis,
- Ein Ergebnis einer Klassifizierung des zumindest einem detektierten Hindernisses und/oder eines Objekts, wobei das Hindernis/Objekt als Lebewesen klassifiziert wird, und/oder des detektierten Lebewesens (300),
- Eine Angabe einer erkannten Geste, vorzugsweise Kickgeste,
wobei vorzugsweise das Radarsensorsystem (20) als ein Radarsystem zur Erkennung einer Geste und vorzugsweise Fußbewegungsgeste ausgeführt ist.

5. System (10) nach einem der vorhergehenden Ansprüche,
**dadurch gekennzeichnet,**
**dass** die Verarbeitungsvorrichtung (40) dazu ausgeführt ist, die Lebewesenerkennung selbst durchzuführen, und/oder
**dass** das Radarsensorsystem (20) als ein Radarsystem zur Gestenerkennung und/oder gestenbasierten Steuerungen und/oder Anwesenheitsdetektion und/oder Annäherungsdetektion und/oder Ortung und/oder Lokalisierung und/oder Objektverfolgung und/oder Zugangskontrolle ausgebildet ist.

6. System (10) nach einem der vorhergehenden Ansprüche,
**dadurch gekennzeichnet,**
**dass** die Verarbeitungsvorrichtung (40) dazu ausgeführt ist, eine Initiierung und/oder Ausführung des Betriebsvorgangs einer weiteren Fahrzeugvorrichtung (220) zu überlassen, und hierzu das Ergebnis der Verarbeitung und vorzugsweise der Lebewesenerkennung der weiteren Fahrzeugvorrichtung (220), vorzugsweise in digitaler Form und/oder über ein Fahrzeugkommunikationssystem (230), bereitstellt.

7. System (10) nach einem der vorhergehenden Ansprüche,
**dadurch gekennzeichnet,**
**dass** die Verarbeitungsvorrichtung (40) dazu ausgeführt ist, zyklisch zwischen einem ersten Modus und zumindest einem zweiten Modus umzuschalten, wobei
- im ersten Modus eine Gestenerkennung, vorzugsweise Kickerkennung, und
- im zweiten Modus eine Lebewesenerkennung, vorzugsweise Bewegungserkennung, bevorzugt Atmungserkennung, und vorzugsweise
- in einem dritten Modus eine energiesparende Annäherungserkennung,
auf Basis der Verarbeitung der Erfassungsdaten durch die Verarbeitungsvorrichtung (40) durchgeführt wird, wobei bevorzugt die energiesparende Annäherungserkennung dazu dient, einen Basiszustand bereitzustellen, welcher zur Initiierung einer Umschaltung in den Modus zur Gesten- und/oder Lebewesenerkennung jeweils mit höherem Energieverbrauch vorgesehen ist, und wobei zur Initiierung der Umschaltung in den Modus zur Lebewesenerkennung ein separater Auslöser vorgesehen ist, welcher bevorzugt auf Basis einer Initiierung des Betriebsvorgangs bereitgestellt wird.

8. System (10) nach einem der vorhergehenden Ansprüche,
**dadurch gekennzeichnet,**
**dass** das System (10) dazu ausgeführt ist, die Ausführung des Betriebsvorgangs zu unterbinden, wenn ein Lebewesen erkannt wird.

9. System (10) nach einem der vorhergehenden Ansprüche,
**dadurch gekennzeichnet,**
**dass** das System (10) dazu ausgeführt ist, den Betriebsvorgang in der Form eines zumindest teilweise automatisierten oder autonomen Fortbewegungs- und vorzugsweise Parkvorgangs des Fahrzeuges, je nach Ergebnis der Verarbeitung, auszuführen oder zu unterbinden.

10. System (10) nach einem der vorhergehenden Ansprüche,
**dadurch gekennzeichnet,**
**dass** zumindest einer oder zumindest zwei der Radarsensoren (30) des Radarsensorsystems (20) als ein UWB-Sensor ausgebildet ist.

11. System (10) nach einem der vorhergehenden Ansprüche,
**dadurch gekennzeichnet,**
**dass** zumindest ein oder zumindest zwei Radarantennen (35) für den jeweiligen oder den einzigen Radarsensor (30) vorgesehen sind, wobei die oder zumindest eine der Radarantennen (35) derart ausgerichtet ist, dass die Erfassung unterhalb des Fahrzeuges (200) zur Lebewesenerkennung ermöglicht wird, und zumindest eine der Radarantennen (35) derart ausgerichtet ist, dass eine Gesten- und vorzugsweise Kickerkennung ermöglicht wird.

12. System (10) nach einem der vorhergehenden Ansprüche,
**dadurch gekennzeichnet,**
**dass** das Radarsensorsystem (20) und/oder zumindest einer der Radarsensoren (30) und/oder zumindest eine Radarantenne (35) des Radarsensorsystems (20) und/oder die Verarbeitungsvorrichtung (40) dazu ausgebildet ist, in oder an zumindest einem/einer der folgenden Fahrzeugkomponenten (240) befestigt zu werden oder dort befestigt ist, wobei im letzteren Fall die Fahrzeugkomponente (240) Teil des Systems (10) ist:
- Ein Stoßfänger (203),
- Ein Emblem (204),
- Ein Türgriff (205),
- Eine Säule (206), vorzugsweise B-Säule,
- Ein Schweller (207),
- Eine Radhausverkleidung (208),
- Ein Fahrzeugunterboden (201).

13. System (10) nach einem der vorhergehenden Ansprüche,
**dadurch gekennzeichnet,**
**dass** das System (10) dazu ausgeführt ist, den Betriebsvorgang in der Form von zumindest einer der folgenden Vorgänge zu initiieren:
- Ein Einparkvorgang,
- Eine autonome Fahrzeugfunktion,
- Ein Fernstart des Fahrzeuges (200),
- Eine Fernsteuerung des Fahrzeuges (200) zur Bewegung des Fahrzeuges (200),
- Eine unüberwachte Fahrzeugfunktion,
- Eine Alarmanlage,
wobei das Radarsensorsystem (20) zusätzlich für zumindest eine der folgenden Funktionen verwendet wird:
- Eine Gestendetektion, vorzugsweise Kickdetektion zur automatischen Öffnung einer Heck- oder Frontklappe (202),
- Eine Personendetektion,
- Eine Kollisionserkennung,
- Eine Regelung von Fahrwerksparametern,
- Eine Erkennung von Untergründen in besonderen Fahrsituationen, wie Schnee,
- Eine Annäherungsdetektion und/oder Ortung und/oder Authentifizierung eines Benutzers.

14. Verfahren (100) für ein Fahrzeug (200), zur Erkennung von Lebewesen (300) außerhalb des Fahrzeuges (200) vor dem Ausführen eines zumindest teilweise automatisierten Betriebsvorgangs, vorzugsweise Parkvorgangs, des Fahrzeuges (200), in einem stehenden, unbewegten Zustand des Fahrzeuges (200), umfassend:
- Empfangen (101) von Erfassungsdaten von einem Radarsensorsystem (20) des Fahrzeuges (200) für eine Erfassung eines Außenbereichs (250) des Fahrzeuges (200),
- Verarbeiten (102) der Erfassungsdaten,
- Bereitstellen (103) eines Ergebnisses der Verarbeitung (101) für die Erkennung der Lebewesen (300), und/oder
- Bereitstellen (104) des Ergebnisses der Verarbeitung (101) für die Ausführung des Betriebsvorgangs in Abhängigkeit von der Lebewesenerkennung.

15. Vorrichtung (90) zur Datenverarbeitung, vorzugsweise für ein System (10) nach einem der Ansprüche 1 bis 13, die eingerichtet ist, das Verfahren (100) nach Anspruch 14 auszuführen.
